# EUROPEAN PATENT SPECIFICATION

(11) **EP 1 767 018 B1**
(45) Date of publication and mention of the grant of the patent: **12.12.2007**
(21) Application number: 05759329.5
(22) Date of filing: 12.07.2005
(51) Int. Cl.: H04Q 7/22

(54) **TELECOMMUNICATIONS SERVICES APPARATUS AND METHODS**
TELEKOMMUNIKATIONSDIENSTEVORRICHTUNGEN UND -VERFAHREN
DISPOSITIFS ET PROCEDES DE SERVICES DE TELECOMMUNICATIONS

(30) Priority: 13.07.2004 GB 0415632
(43) Date of publication of application: 28.03.2007
(73) Proprietor: INTELLPROP LIMITED, Guernsey, Channel Islands (GB)
(72) Inventor: WILSON, Jeffrey, Hampshire PO16 7OH (GB)
(74) Representative: Lewis, Darren John
(86) International application number: PCT/GB2005/002718
(87) International publication number: WO 2006/005937

(56) References cited:
- EP-A- 0 555 992
- WO-A-03/036906
- WO-A-03/039182
- WO-A-20/04045231

## Description

This invention relates to telecommunications services apparatus and methods for use with a telecommunications system, such as a mobile telephone system involving mobile devices and methods for data, voice and/or text message communication. Although described in the context of GSM networks, the present invention is also applicable to other mobile networking technologies.

Voice and text have become established as the two main methods of communication between people. The introduction of mobile telephone systems has allowed subscribers to enjoy unprecedented freedom in their communication. At the same time, growth in data communication, particularly related to the Internet, has resulted in data traffic on fixed networks being responsible for a significant proportion of total telecommunication traffic. There is a trend towards convergence of the data communication and personal communication worlds, and a large number of mobile telephones today also have data communication capability. Personal computers and Personal Digital Assistants (PDAs) increasingly are equipped with wireless capability, whether for example through indirect connection to a GSM terminal via a cable or short range wireless link, or by integration of GSM, Bluetooth or Wi-Fi connectivity.

Recently, standalone 'data cards' have been introduced which simply plug into the PCMCIA slot of a portable computer, and provide GSM connectivity directly without the need to link indirectly to a separate mobile telephone. These may be either second generation (2G) or enhanced second generation (2.5G) Data cards. 2G technology supports data communication using a single voice timeslot as a data channel and can typically support 9.6 kbit/s. 2.5G mobile telephone networks support a data communication capability using GPRS (General Packet Radio Service.) This allows capable handsets to communicate with third-party applications and network services using a primarily IP transport infrastructure, at a higher data rate than is possible using 2G circuit switched data. Until recently data communication over GPRS was restricted to high-end mobile telephone handsets, but this has been extended to portable computers by the use of GPRS-capable Data cards.

When combined with dedicated software, a Data card can substantially increase the convenience and usability of GSM data communication from a portable computer. This also offers the possibility to send text messages from the computer, utilising the added convenience of a 'Qwerty' style keyboard. It means that the user is able to perform all of his personal and data communication tasks from the one device.

Implementations of 'Dual SIM' or 'MultiSIM' subscriptions have been introduced in some networks. These purport to offer all of the normal features of a mobile subscription, while also allowing multiple SIMs to share the same MSISDN. In practice this means that one of the SIMs must be nominated as the current master, and will receive all calls and text messages. Typically any of the SIMs is able to originate communications. However MultiSIM operation is complex both for the network and the user, and consequently these special subscriptions have not been a great success. Some operators have not succeeded in combining GPRS support with their MultiSIM offerings, and therefore these features are mutually exclusive on those networks.

Before the advent of Data cards, GSM connectivity to a portable computer was only possible using an indirect communication link between the computer and a telephone. This link is normally implemented using Infrared, Bluetooth or a serial cable. The arrangement is inconvenient for the user, because it means that two devices are required in order to establish data communication between the computer and the network, and also the local connection to the phone must be configured and managed. This can make the process too complicated to be within the reach of a majority of users.

Even where a portable computer or PDA has integrated wireless capability, this is normally aligned with the IEEE 802.3 range of standards, and this does not allow direct integration with text messaging systems such as are provided by the GSM mobile telephony system.

EP 0555992 A1 discloses a data card for use with computer and a mobile phone terminal, both the data card and the mobile phone having SIM interfaces. However, in EP 0555992 A1 only one SIM with a corresponding originating address is used and is located either in the phone or in the data card.

WO 2004/045231 A1 discloses receiving a mobile originated text message, recognising from characteristics of the received text message that the message is one requiring the originating address of the message to be translated, determining a preferred address from the recognised originating address and substituting the preferred address before onward routing.

Unfortunately, the convergence of data and personal communication presents some difficulties with regard to text messaging. Almost all forms of communication implicitly involve communicating the identity of the originator. This is straightforward for email for example, and it is convenient and effective to undertake email communication from a variety of different terminals, because the originator's address is carried at a high level in the protocol stack, since the email address is carried at the highest application layer. The email address could be said to be portable, since a user may communicate from his home, his office, or an Internet café, and still use the same email address, allowing recipients to readily ascertain the sender.

The same is not true for personal telephony. For example in the GSM system, a user must be authenticated before being allowed access to either his home network or a roaming network. This is achieved using the Subscriber Identity Module (SIM) which is fitted to his handset. The separation of this identity from the physical terminal is one of the foundations of GSM's success, but with this comes the disadvantage that one's identity is now tied to a single physical entity (the SIM) that can only be fitted to one device at a time.

Consequently, for the user who wishes to take advantage of the convenience offered by a Data card plugged into his portable computer, that is separate from his mobile telephone, there is now a problem of identification. Due to the architecture of GSM, the Data card must have its own SIM, since it attaches to the network in the same way as a mobile telephone and must be authenticated independently. This means that the SIM in the Data card and the SIM in the user's telephone will have different International Mobile Subscriber Identities (IMSIs.) In general they will also have different Mobile Subscriber ISDN numbers (MSISDNs). While the user's mobile telephone number may be widely known amongst his friends and associates, generally the number of a newly purchased Data card will not be known. Thus when the user sends a text message from his mobile telephone, the recipient may recognise the sender's Calling Line Identity (CLI), and even have the sender's name displayed if the sender is in the handset's phone book. However when the same user sends a message from his portable computer, using the Data card, the recipient will generally be unlikely to recognise the sender. This is a problem that currently hinders the growth of Data cards as a consumer product, despite their other advantages.

According to one aspect of the invention there is provided a telecommunication system comprising a mobile phone terminal a data card for a computer and a telecommunications services apparatus, the apparatus comprising means for receiving a mobile originated text message, means for recognising from characteristics of the received text message that the message is one requiring the originating address of the message to be translated, and means for determining a preferred address from the recognised originating address and operable to substitute the preferred address for said recognised originating address before onward routing the message for delivery by the telecommunications system, wherein, when the originating address of a received message is that of the data card, the apparatus is operable to substitute the preferred address which is that of the mobile telephone terminal.

According to another aspect of the invention there is provided a telecommunications services method in a telecommunications system for use with a mobile telephone terminal and a computer provided with a data card, the method comprising receiving a mobile originated text message, recognising from characteristics of the received text message that the message is one requiring the originating address of the message to be translated, determining a preferred address from the recognised originating address, and substituting the preferred address for the recognised originating address before onward routing the message for delivery by the telecommunications system, wherein when the originating address of a received message is that of the data card, the preferred address is substituted, the preferred address being that of the mobile phone terminal.

According to another further aspect of the invention, recognition of the message to be translated may be by means of matching the originating address to a list or database, and deriving the preferred address from a corresponding list or database.

According to a still further aspect of the invention, the association between the recognised origination address and the preferred address to be substituted may be provisioned by the subscriber. Such provisioning may optionally be restricted to associations between different numbers registered to the same subscriber, and authenticated as being requested only by the corresponding subscriber.

Other aspects of the invention provide a computer program having computer executable instructions, which when loaded on to a computer is operable to cause the computer to perform the above method, and also a computer program product having recorded thereon such computer program.

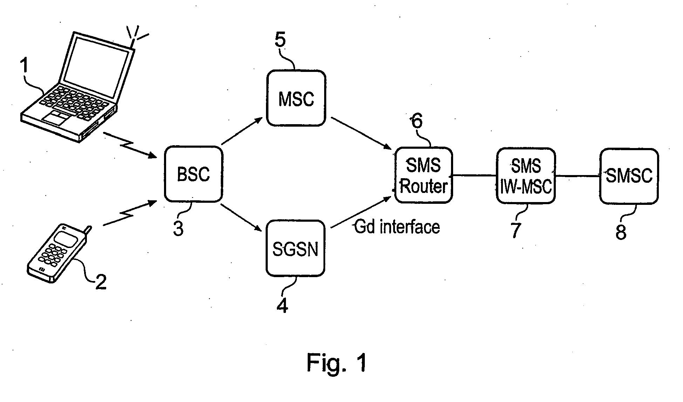

The invention will now be described by way of example with reference to the accompanying drawing in which the single figure (Figure 1) is a diagram of the Mobile Originated signal path through a 2G or 2.5G GSM network, in accordance with a preferred embodiment of the invention.

Referring to Figure 1, a portable computer 1 and a mobile telephone 2 are both independently connectable to a mobile telephone network. A text message is sent from either the computer 1 or the mobile telephone 2, and passes through a base station controller (BSC) 3. Depending whether the message is sent over SS7 or GPRS the message then passes via a mobile switching centre (MSC) 5 or a Serving GPRS Support Node (SGSN) 4, respectively. The message is then routed via an SMS router 6, and may then be directly delivered to its destination (not shown) or stored in a short message service centre (SMSC) 8 via an SMS Interworking MSC 7, prior to onward delivery. The SMS router 8 may be, for example, a Telsis (RTM) SMS Router, manufactured by Telsis Limited.

The present technique allows the owner of two or more SIM cards, for example those purchased for separate use in a mobile telephone and a Data card, to self-provision an association between the MSISDN numbers of these two SIMs. For example the user may wish that the number of the mobile telephone SIM be his primary contact number, since it is already know to his associates, while the number of the Data card is unknown to them. In this case he may provision a CLI substitution for all messages that he originates using the Data card.

The network architecture is arranged, as is increasingly common, so that all Mobile Originated (MO) text messages, whether sent over SS7 or GPRS, pass through the SMS router 6. In a preferred embodiment, CLI substitution according to the present technique is applied by the SMS router 6 to messages in the MO path. A CLI to be substituted is recognised by the SMS router 6 as the MO message is processed by the SMS router 6, and the substitution is performed. The subsequent delivery path of the message need not be affected. Optionally the SMS router 6 may also be configured to perform MO to MT conversion and to attempt direct delivery of some or all messages. Alternatively, the SMS router 6 may be configured to pass MO messages to the SMSC 8 for delivery. The CLI substitution may be performed by the SMS router 6 by reference to a list or database in a store (not shown), matching originating addresses with preferred addresses for CLI substitution.

In the event that the network wishes to charge differently for substituted and non-substituted messages, or to ensure that substituted messages appear on the bill for the Data card number rather than the bill for the substituted number, then call detail records (or real-time messaging to a Pre-Pay system) provided from the SMS router 6 may be used to assist in this process. Since the service is primarily applicable to post-pay business customers, the use of call detail records will normally be sufficient.

From the recipient's point of view, a message from the above user, whether originated from the user's portable computer 1 or from his mobile handset 2, is now received with the same originating address and may readily be recognised as being from the same user. Furthermore the recipient may make either a voice call or a send a text message in reply, and the communication will be delivered to the user's mobile handset. Prior to implementation of this technique, if the recipient tried to make a voice call reply while the portable PC 1 was in standby mode (or switched off) then the voice call would fail with number unavailable. Similarly, a text message delivery would fail and the message would be stored in the network until it could be delivered, while no notification to the recipient's mobile handset would be attempted. The present technique is advantageous because the mobile handset 2 is far more likely to be switched on and available at any given time than the portable computer 1, and hence end-to-end messaging efficiency is increased significantly.

Preferably provisioning is carried out via a Mobile Originated (MO) SMS service, whereby provisioning commands may be intercepted by the same SMS router(s) that implement the translation. Optionally an SMS Service Control Point (SMS-SCP) may be deployed to provide a central point of intelligence, and data storage, for the SMS router(s). Alternatively provisioning may be by USSD or the web, or by another method.

The technique is also applicable to third generation (3G) networks where the functionality of the 2G SIM is replicated and enhanced by the 3G USIM. However the same issues of authentication remain, which means that because the USIM is a physical entity that can only be fitted to one device at a time, 3G will suffer from the same problem as has been shown for 2G and 2.5G.

It may also be advantageous to implement the present technique in conjunction with functionality for diverting SMS to alternative destination(s), since Divert functionality may also be achieved using SMS routers. Combining Divert capability with the consistent CLI provided by the present technique provides a more complete solution for business SMS. However, unless steps are taken to avoid them, loops or excessively long chains of diversions can occur with a divert service. One effective solution to this is to use spare capacity within the User Data header, for example by defining a new Information element or utilising existing spare bits in an existing element, which can indicate that a message has been diverted, and optionally indicate the number of times that a message has been diverted. This could work in an analogous manner to the hop counter in ISUP, or by another method, and be used to prevent undesired loops or long chains.

In so far as the embodiment(s) of the invention described above may be implemented, at least in part, using software controlled processing apparatus, it will be appreciated that a computer program providing such software control and a storage medium by which such a computer program is stored are envisaged as aspects of the invention.

## Claims

1. A telecommunications system comprising a mobile telephone terminal (2), a data card for a computer (1), and a telecommunications services apparatus, the apparatus comprising means for receiving a mobile originated text message, means for recognising from characteristics of the received text message that the message is one requiring the originating address of the message to be translated, and means for determining a preferred address from the recognised originating address and operable to substitute the preferred address for said recognised originating address before onward routing the message for delivery by the telecommunications system, wherein, when the originating address of a received message is that of the data card, the apparatus is operable to substitute the preferred address which is that of the mobile telephone terminal (2).

2. A system according to claim 1, wherein the characteristics of the message to be recognised are when the originating address is one of a plurality of specific originating addresses.

3. A system according to claim 1 or claim 2, including storage means linking a plurality of originating addresses with corresponding preferred addresses, the determining means being operable to derive the preferred address from the storage means on the basis of the linked recognised originating address.

4. A system according to claim 1, claim 2 or claim 3, including provisioning means operable to allow a subscriber to provision association between an originating address and a respective preferred address.

5. A system according to claim 4, wherein the provisioning means allows provisioning only to associations between different numbers registered to the same subscriber.

6. A system according to claim 5, wherein the provisioning means is operable to enable provisioning only upon authentication of the requesting subscriber.

7. A system according to claim 4, claim 5 or claim 6, wherein the provisioning means is responsive to mobile originated short message services commands, unstructured supplementary services data commands, or commands sent over the web.

8. A telecommunications services method in a telecommunications system, for use with a mobile telephone terminal (2) and a computer (1) provided with a data card, the method comprising receiving a mobile originated text message, recognising from characteristics of the received text message that the message is one requiring the originating address of the message to be translated, determining a preferred address from the recognised originating address, and substituting the preferred address for the recognised originating address before onward routing the message for delivery by the telecommunications system, wherein, when the originating address of a received message is that of the data card, the preferred address is substituted, the preferred address being that of the mobile telephone terminal (2).

9. A method according to claim 8, wherein the characteristics of the message to be recognised are when the originating address is one of a plurality of specific originating addresses.

10. A method according to claim 8 or claim 9, wherein a plurality of originating addresses linked with corresponding preferred addresses are stored, the preferred address being determined on the basis of the linked recognised originating address.

11. A method according to claim 8, claim 9 or claim 10, wherein a subscriber is allowed to provision association between an originating address and a respective preferred address.

12. A method according to claim 11, wherein provisioning is allowed only to associations between different numbers registered to the same subscriber.

13. A method according to claim 12, wherein provisioning is enabled only upon authentication of the requesting subscriber.

14. A method according to claim 11, claim 12 or claim 13, wherein provisioning is responsive to mobile originated short message services commands, unstructured supplementary services data commands, or commands sent over the web.

15. A computer program having computer executable instructions, which when loaded on to a computer causes the computer to perform all the steps of the method according to any one of claims 8 to 14.

16. A computer program according to claim 15, wherein said program is stored on a computer readable medium.

## Patentansprüche

1. Telekommunikationssystem, das ein mobiles Fernsprechgerät (2), eine Datenkarte für einen Computer (1) und eine Telekommunikationsdienstevorrichtung aufweist, wobei die Vorrichtung eine Einrichtung für das Empfangen einer von einem Mobiltelefon stammenden Textnachricht, eine Einrichtung für das Erkennen aus den Eigenschaften der empfangenen Textnachricht, daß die Nachricht eine Nachricht ist, die es erfordert, daß die Ursprungsadresse der Nachricht übersetzt wird, und eine Einrichtung für das Bestimmen einer bevorzugten Adresse aus der erkannten Ursprungsadresse aufweist und betreibbar ist, um die bekannte Ursprungsadresse durch die bevorzugte Adresse zu ersetzen bevor die Nachricht für die Auslieferung durch das Telekommunikationssystem weitergeleitet wird, wobei, wenn die Ursprungsadresse einer empfangenen Nachricht die einer Datenkarte ist, die Vorrichtung betreibbar ist, um die bevorzugte Adresse einzusetzen, weiche diejenige des mobilen Telefongerätes (2) ist.

2. System nach Anspruch 1, bei der die Eigenschaft der zu erkennenden Nachrichten darin besteht, daß die Ursprungsadresse eine einer Mehrzahl von spezifischen Ursprungsadressen ist.

3. System nach Anspruch 1 oder Anspruch 2, das Speichereinrichtungen beinhaltet, die eine Mehrzahl von Ursprungsadressen mit entsprechenden bevorzugten Adressen verknüpft, wobei die Bestimmungseinrichtung betreibbar ist, um die bevorzugte Adresse auf Basis der verknüpften erkannten Ursprungsadresse aus der Speichereinrichtung abzuleiten.

4. System nach Anspruch 1, Anspruch 2 oder Anspruch 3, das eine Beschaffungseinrichtung beinhaltet, die betreibbar ist, um einem Teilnehmer zu erlauben eine Verknüpfung zwischen einer Ursprungsadresse und einer entsprechenden bevorzugten Adresse zu beschaffen.

5. System nach Anspruch 4, bei dem die Beschaffungseinrichtung das Beschaffen nur bei Verknüpfungen zwischen verschiedenen Nummern, die für denselben Teilnehmer eingetragen sind, erlaubt wird.

6. System nach Anspruch 5, bei dem die Beschaffungseinrichtung betreibbar ist, um das Beschaffen nur mit Authentifizierung des anfragenden Teilnehmers zu ermöglichen.

7. System nach Anspruch 4, Anspruch 5 oder Anspruch 6, bei dem die Beschaffungseinrichtung auf vom Mobiltelefon stammenden Kurznachrichtendienstbefehle, auf nicht strukturierte Hilfsdienstdatenbefehle oder auf Befehle, die über das Netz gesendet wurden, reagiert.

8. Telekommunikationsdienstverfahren in einem Telekommunikationssystem für die Verwendung mit einem mobilen Telefongerät (2) und einem Computer (1), der mit einer Datenkarte ausgestattet ist, wobei das Verfahren aufweist, das Empfangen einer von einem Mobiltelefon stammenden Textnachricht, das Erkennen anhand von Eigenschaften der empfangenen Textnachricht, daß die Nachricht eine ist, die das Übersetzen der Ursprungsadresse der Nachricht erfordert, das Bestimmen einer bevorzugten Adresse aus der erkannten Ursprungsadresse und das Ersetzen der erkannten Ursprungsadresse durch die bevorzugte Adresse vor der Weiterleitung der Nachricht für die Auslieferung durch das Telekommunikationssystem, wobei, wenn die Ursprungsadresse einer empfangenen Nachricht diejenige einer Datenkarte ist, die bevorzugte Adresse eingesetzt wird, wobei die bevorzugte Adresse diejenige eines mobilen Telefongerätes (2) ist.

9. Verfahren nach Anspruch 8, bei dem die Eigenschaft der zu erkennenden Nachricht diejenige ist, daß die Ursprungsadresse eine einer Mehrzahl von spezifischen Ursprungsadressen ist.

10. Verfahren nach Anspruch 8 oder Anspruch 9, bei dem eine Mehrzahl von Ursprungsadressen, die mit entsprechenden bevorzugten Adressen verknüpft sind, gespeichert werden, wobei die bevorzugte Adresse auf Basis der verknüpften erkannten Ursprungsadresse bestimmt wird.

11. Verfahren nach Anspruch 8, Anspruch 9 oder Anspruch 10, bei dem einem Teilnehmer erlaubt wird, eine Verknüpfung zwischen einer Ursprungsadresse und einer entsprechenden bevorzugten Adresse bereitzustellen.

12. Verfahren nach Anspruch 11, bei dem das Bereitstellen nur für Verknüpfungen zwischen verschiedenen Nummern, die für denselben Teilnehmer eingetragen sind, erlaubt wird.

13. Verfahren nach Anspruch 12, bei dem das Bereitstellen nur mit Authentifizierung des Anfragenden Teilnehmers ermöglicht wird.

14. Verfahren nach Anspruch 11, Anspruch 12 oder Anspruch 13, bei dem das Bereitstellen auf vom Mobiltelefon stammende Kurznachrichtsdienstbefehle, und strukturierte Hilfsdienstdatenbefehle, oder Befehle, die über das Netz gesendet wurden, reagiert.

15. Computerprogramm mit, computerausführbaren Befehlen, die, wenn sie auf einen Computer geladen werden, veranlassen, daß der Computer alle Schritte des Verfahrens nach einem der Ansprüche 8 bis 14 durchführt.

16. Computerprogramm nach Anspruch 15, wobei das Programm auf einem computerlesbarem Medium abgelegt ist.

## Revendications

1. Système de télécommunications comprenant un terminal téléphonique mobile (2), une carte de données pour un ordinateur (1) et un appareil de services de télécommunications, l'appareil comprenant un moyen destiné à recevoir un message de texte provenant d'un mobile, un moyen destiné à reconnaître, à partir de caractéristiques du message de texte reçu, que le message est un message demandant que l'adresse d'origine du message soit traduite, et un moyen destiné à déterminer une adresse préférée à partir de l'adresse d'origine reconnue et en mesure de substituer l'adresse préférée à ladite adresse d'origine reconnue avant d'acheminer le message pour remise par le système de télécommunications, dans lequel, lorsque l'adresse d'origine d'un message reçu est celle de la carte de données, l'appareil est en mesure de substituer l'adresse préférée qui est celle du terminal téléphonique mobile (2).

2. Système selon la revendication 1, dans lequel les caractéristiques du message à reconnaître sont la circonstance selon laquelle l'adresse d'origine est une adresse parmi une pluralité d'adresses d'origine spécifiques.

3. Système selon la revendication 1 ou la revendication 2, comprenant un moyen de stockage associant une pluralité d'adresses d'origine à des adresses préférées correspondantes, le moyen de détermination étant en mesure de dériver l'adresse préférée à partir du moyen de stockage, sur la base de l'adresse d'origine reconnue et associée.

4. Système selon la revendication 1, la revendication 2 ou la revendication 3, comprenant un moyen d'approvisionnement en mesure de permettre à un abonné de fournir une association entre une adresse d'origine et une adresse préférée respective.

5. Système selon la revendication 4, dans lequel le moyen d'approvisionnement permet de n'approvisionner que des associations entre différents numéros enregistrés au nom du même abonné.

6. Système selon la revendication 5, dans lequel le moyen d'approvisionnement est en mesure de ne valider la fonction de fourniture qu'après authentification de l'abonné demandeur.

7. Système selon la revendication 4, la revendication 5 ou la revendication 6, dans lequel le moyen d'approvisionnement répond à des instructions de services de messages courts provenant d'un mobile, à des instructions de données de services supplémentaires non structurés ou à des instructions envoyées via la toile.

8. Procédé de services de télécommunications dans un système de télécommunications, destiné à être utilisé avec un terminal téléphonique mobile (2) et un ordinateur (1) équipé d'une carte de données, le procédé comprenant les étapes consistant à recevoir un message de texte provenant d'un mobile, à reconnaître, à partir de caractéristiques du message de texte reçu, que le message est un message demandant que l'adresse d'origine du message soit traduite, à déterminer une adresse préférée à partir de l'adresse d'origine reconnue et à substituer l'adresse préférée à ladite adresse d'origine reconnue avant d'acheminer le message pour remise par le système de télécommunications, dans lequel, lorsque l'adresse d'origine d'un message reçu est celle de la carte de données, l'adresse préférée est substituée, l'adresse préférée étant celle du terminal téléphonique mobile (2).

9. Procédé selon la revendication 8, dans lequel les caractéristiques du message à reconnaître sont la circonstance selon laquelle l'adresse d'origine est une adresse parmi une pluralité d'adresses d'origine spécifiques.

10. Procédé selon la revendication 8 ou la revendication 9, dans lequel sont mémorisées une pluralité d'adresses d'origine associées à des adresses préférées correspondantes, l'adresse préférée étant déterminée sur la base de l'adresse d'origine reconnue et associée.

11. Procédé selon la revendication 8, la revendication 9 ou la revendication 10, dans lequel un abonné est autorisé à fournir une association entre une adresse d'origine et une adresse préférée respective.

12. Procédé selon la revendication 11, dans lequel la fourniture n'est autorisée que pour des associations entre différents numéros enregistrés au nom du même abonné.

13. Procédé selon la revendication 12, dans lequel la fourniture d'associations n'est validée qu'après authentification de l'abonné demandeur.

14. Procédé selon la revendication 11, la revendication 12 ou la revendication 13, dans lequel la fourniture répond à des instructions de services de messages courts provenant d'un mobile, à des instructions de données de services supplémentaires non structurés ou à des instructions envoyées via la toile.

15. Programme d'ordinateur ayant des instructions exécutables par ordinateur qui, lorsqu'elles sont chargées sur un ordinateur, commandent à l'ordinateur d'exécuter toutes les étapes du procédé selon l'une quelconque des revendications 8 à 14.

16. Programme d'ordinateur selon la revendication 15, dans lequel ledit programme est stocké sur un support lisible par ordinateur.
